# EUROPEAN PATENT SPECIFICATION

(11) **EP 4 299 628 B1**
(45) Date of publication and mention of the grant of the patent: **21.10.2026**
(21) Application number: 22759873.7
(22) Date of filing: 28.02.2022
(51) Int. Cl.: C08J 3/20, C08F 214/26, C09D 127/18, H01B 3/44, C08J 5/18, C08F 8/22, C08F 214/28, C08F 216/14

(54) **FLUORINE-CONTAINING COPOLYMER**
FLUORHALTIGES COPOLYMER
COPOLYMÈRE CONTENANT DU FLUOR

(30) Priority: 26.02.2021 JP 2021031107; 26.02.2021 JP 2021031103; 26.02.2021 JP 2021031100; 26.02.2021 JP 2021031110
(43) Date of publication of application: 03.01.2024
(73) Proprietor: DAIKIN INDUSTRIES, LTD., Osaka 530-0001 (JP)
(72) Inventor: ISAKA, Tadaharu, Osaka-shi, Osaka 530-8323 (JP); ZENKE, Yumi, Osaka-shi, Osaka 530-8323 (JP); YAMAMOTO, Yukari, Osaka-shi, Osaka 530-8323 (JP)
(74) Representative: Hoffmann Eitle
(86) International application number: PCT/JP2022/008458
(87) International publication number: WO 2022/181840

(56) References cited:
- WO-A1-01/18076
- WO-A1-2006/135091
- JP-A- 2017 503 052
- JP-A- 2020 100 823
- JP-A- S62 192 411
- US-A- 3 085 083
- US-A- 4 029 868
- US-A1- 2015 175 757
- EZHOV V. K.: "Investigation of permeability of fluorine and certain fluorinated gases through nonporous fluorine-resistant polymers", PETROLEUM CHEMISTRY, vol. 54, no. 8, 7 January 2015 (2015-01-07), Moscow, pages 608 - 611, XP035421678, ISSN: 0965-5441, DOI: 10.1134/S0965544114080052

## Description

### TECHNICAL FIELD

The present disclosure relates to a fluorine-containing copolymer.

### BACKGROUND ART

Patent Literature 1 describes a terpolymer containing (a) tetrafluoroethylene, (b) hexafluoropropylene in an amount of about 4 to about 12% by weight based on the weight of the terpolymer, and (c) perfluoro(ethyl vinyl ether) or perfluoro(n-propyl vinyl ether) in an amount of about 0.5 to about 3% by weight based on the weight of the terpolymer, in a copolymerized form. Patent Literature 2 describes a terpolymer of TFE / HFP / PPVE with 7% by weight of HFP, 2.17% by weight of PPVE, having a MFR of 7 g/10 min and that is suitable for the oriented extruded films.

### RELATED ART

### PATENT LITERATURE

Patent Literature 1: Japanese Patent Laid-Open No. 52-109588, Patent Literature 2: US 2015/175757 A1.

### SUMMARY OF THE INVENTION

### PROBLEM TO BE SOLVED BY THE INVENTION

An object of the present disclosure is to provide a fluorine-containing copolymer which is unlikely to deform even in a melt state, can give a beautiful injection molded article by being molded by an injection molding method, can be formed by an extrusion forming method into a very thick coating layer in a uniform thickness on a core wire very large in diameter, can give a beautiful tube with forming by an extrusion forming method, and can give a formed article which is excellent in the 110°C abrasion resistance, the low oxygen permeation, the 85°C high-temperature rigidity, the 130°C tensile creep resistance, and the durability to repeated loads.

### MEANS FOR SOLVING THE PROBLEM

According to the present disclosure, there is provided a fluorine-containing copolymer comprising tetrafluoroethylene unit, hexafluoropropylene unit and perfluoro(propyl vinyl ether) unit, wherein the copolymer has a content of hexafluoropropylene unit of 6.0 to 7.6% by mass with respect to the whole of the monomer units, a content of perfluoro(propyl vinyl ether) unit of 1.5 to 2.4% by mass with respect to the whole of the monomer units, a melt flow rate at 372°C of 4.5 to 9.5 g/10 min and a total number of carbonyl group-containing terminal groups, -CF=CF₂ and - CH₂OH of ≤ 90 per 10⁶ main-chain carbon atoms.

It is preferable that the content of hexafluoropropylene unit is 6.2 to 7.2% by mass with respect to the whole of the monomer units.

It is preferable that the content of perfluoro(propyl vinyl ether) unit is 1.7 to 2.2% by mass with respect to the whole of the monomer units.

It is preferable that the melt flow rate at 372°C is 5.0 to 8.9 g/10 min.

It is preferable that the number of -CF₂H is 90 or less per 10⁶ main-chain carbon atoms.

Then, according to the present disclosure, there is provided an injection molded article comprising the above fluorine-containing copolymer.

Further, according to the present disclosure, there is provided a coated electric wire comprising a coating layer comprising the above fluorine-containing copolymer.

Further, according to the present disclosure, there is provided a formed article comprising the above fluorine-containing copolymer, wherein the formed article is a syringe, a tube, a film or an electric wire coating.

### EFFECT OF INVENTION

According to the present disclosure, there can be provided a fluorine-containing copolymer which is unlikely to deform even in a melt state, can give beautiful injection molded articles by being molded by an injection molding method, can be formed by an extrusion forming method into a very thick coating layer in a uniform thickness on a core wire very large in diameter, can give a beautiful tube with forming by an extrusion forming method, and can give a formed article which is excellent in the 110°C abrasion resistance, the low oxygen permeation, the 85°C high-temperature rigidity, the 130°C tensile creep resistance, and the durability to repeated loads.

### DESCRIPTION OF EMBODIMENTS

Hereinafter, specific embodiments of the present disclosure will be described in detail, but the present disclosure is not limited to the following embodiments.

A fluorine-containing copolymer of the present disclosure comprises tetrafluoroethylene (TFE) unit, hexafluoropropylene (HFP) unit and perfluoro(propyl vinyl ether) (PPVE) unit.

As fluororesins, non melt-processible fluororesins such as polytetrafluoroethylene (PTFE), and melt-fabricable fluororesins are known. PTFE, though having excellent properties, has such a drawback that the melt processing is remarkably difficult. Meanwhile, as the melt-fabricable fluororesins, TFE/HFP copolymers (FEP), TFE/PPVE copolymers (PFA) and the like are known; however, these have a drawback of being inferior in the heat resistance and the like to PTFE. Then, Patent Literature 1 proposes the above-mentioned terpolymer as a fluorocarbon polymer improved in these drawbacks.

However, it is difficult for conventional terpolymers to give formed articles excellent in all the properties of the 110°C abrasion resistance, the low oxygen permeation, the 85°C high-temperature rigidity, the 130°C tensile creep resistance, and the durability to repeated loads. For example, a formed article obtained from the described in Patent Literature 1 is inferior in particularly the abrasion resistance at high temperatures, or the low oxygen permeation and the high-temperature rigidity, and an object is to satisfy both the properties. Accordingly, conventional terpolymers have not been those having properties sufficiently satisfiable for use as materials to be formed into formed articles such as syringes to be repeatedly used and for use in retention of anaerobic chemical solutions at relatively high-temperature.

It has been found that by regulating, in very limited ranges, the contents of HFP unit and PPVE unit of the fluorine-containing copolymer comprising TFE unit, HFP unit and PPVE unit, and the melt flow rate, there are remarkably improved the 110°C abrasion resistance, the low oxygen permeation, the 85°C high-temperature rigidity, the 130°C tensile creep resistance, and the durability to repeated loads of formed articles obtained from the fluorine-containing copolymer. Further, by molding the fluorine-containing copolymer of the present disclosure by an injection molding method, beautiful injection molded articles can be obtained.

Moreover, by forming the fluorine-containing copolymer of the present disclosure by an extrusion forming method, a very thick coating layer can be formed in a uniform thickness on a core wire very large in diameter, and beautiful tubes can be obtained, and the fluorine-containing copolymer can be formed at a high forming speed into thin films uniform in thickness. Thus, the fluorine-containing copolymer of the present disclosure can be not only utilized as materials for syringes, but also can be utilized in broad applications such as tubes, films or electric wire coatings.

Further, since the fluorine-containing copolymer of the present disclosure causes little own weight deformation even in a melt state, thick pipes made of the copolymer have clear cross-sections and uniform thicknesses.

The fluorine-containing copolymer of the present disclosure is a melt-fabricable fluororesin. Being melt-fabricable means that a polymer can be melted and processed by using a conventional processing device such as an extruder or an injection molding machine.

The content of the HFP unit of the fluorine-containing copolymer is, with respect to the whole of the monomer units, 6.0 to 7.6% by mass, preferably 6.1% by mass or higher and more preferably 6.2% by mass or higher, and preferably 7.5% by mass or lower, more preferably 7.4% by mass or lower, still more preferably 7.3% by mass or lower, further still more preferably 7.2% by mass or lower, further still more preferably 6.9% by mass or lower, especially preferably 6.8% by mass or lower and most preferably 6.7% by mass or lower. When the content of the HFP unit is too low, formed articles excellent in the 110°C abrasion resistance cannot be obtained. When the content of the HFP unit is too high, formed articles excellent in the 85°C high-temperature rigidity, the 130°C tensile creep resistance and the durability to repeated loads cannot be obtained.

The content of the PPVE unit of the fluorine-containing copolymer is, with respect to the whole of the monomer units, 1.5 to 2.4% by mass, preferably 1.6% by mass or higher and more preferably 1.7% by mass or higher, and preferably 2.3% by mass or lower, more preferably 2.2% by mass or lower, still more preferably 2.1% by mass or lower and especially preferably 2.0% by mass or lower. When the content of the PPVE unit is too low, formed articles excellent in the 110°C abrasion resistance cannot be obtained. When the content of the PPVE unit is too high, formed articles excellent in the low oxygen permeation, and the 85°C high-temperature rigidity cannot be obtained.

The content of the TFE unit of the fluorine-containing copolymer is, with respect to the whole of the monomer units, preferably 90.0% by mass or higher, more preferably 90.2% by mass or higher, still more preferably 90.4% by mass or higher, further still more preferably 90.5% by mass or higher, especially preferably 90.6% by mass or higher and most preferably 91.3% by mass or higher, and preferably 92.5% by mass or lower, more preferably 92.4% by mass or lower, still more preferably 92.3% by mass or lower, further still more preferably 92.2% by mass or lower, especially preferably 92.1% by mass or lower. The content of the TFE unit may be selected so that there becomes 100% by mass, the total of contents of the HFP unit, the PPVE unit, the TFE unit and other monomer units.

The fluorine-containing copolymer of the present disclosure is not limited as long as the copolymer contains the above three monomer units, and may be a copolymer containing only the above three monomer units, or may be a copolymer containing the above three monomer units and other monomer units.

The other monomers are not limited as long as being copolymerizable with TFE, HFP and PPVE, and may be fluoromonomers or fluorine-non-containing monomers.

It is preferable that the fluoromonomer is at least one selected from the group consisting of chlorotrifluoroethylene, vinyl fluoride, vinylidene fluoride, trifluoroethylene, hexafluoroisobutylene, monomers represented by CH₂=CZ¹(CF₂)ₙZ² (wherein Z¹ is H or F, Z² is H, F or Cl, and n is an integer of 1 to 10), perfluoro(alkyl vinyl ether)s [PAVE] represented by CF₂=CF-ORf¹ (wherein Rf¹ is a perfluoroalkyl group having 1 to 8 carbon atoms) (here, excluding PPVE), alkyl perfluorovinyl ether derivatives represented by CF₂=CF-O-CH₂-Rf² (wherein Rf² is a perfluoroalkyl group having 1 to 5 carbon atoms), perfluoro-2,2-dimethyl- 1,3-dioxol [PDD], and perfluoro-2-methylene-4-methyl-1,3-dioxolane [PMD].

The monomers represented by CH₂=CZ¹(CF₂)ₙZ² include CH₂=CFCF₃, CH₂=CH-C₄F₉, CH₂=CH-C₆F₁₃, and CH₂=CF-C₃F₆H.

The perfluoro(alkyl vinyl ether)s represented by CF₂=CF-ORf¹ include CF₂=CF-OCF₃ and CF₂=CF-OCF₂CF₃.

The fluorine-non-containing monomers include hydrocarbon-based monomers copolymerizable with TFE, HFP and PPVE. Examples of the hydrocarbon-based monomers include alkenes such as ethylene, propylene, butylene, and isobutylene; alkyl vinyl ethers such as ethyl vinyl ether, propyl vinyl ether, butyl vinyl ether, isobutyl vinyl ether, and cyclohexyl vinyl ether; vinyl esters such as vinyl acetate, vinyl propionate, n-vinyl butyrate, vinyl isobutyrate, vinyl valerate, vinyl pivalate, vinyl caproate, vinyl caprylate, vinyl caprate, vinyl versatate, vinyl laurate, vinyl myristate, vinyl palmitate, vinyl stearate, vinyl benzoate, vinyl para-t-butylbenzoate, vinyl cyclohexanecarboxylate, vinyl monochloroacetate, vinyl adipate, vinyl acrylate, vinyl methacrylate, vinyl crotonate, vinyl sorbate, vinyl cinnamate, vinyl undecylenate, vinyl hydroxyacetate, vinyl hydroxypropionate, vinyl hydroxybutyrate, vinyl hydroxyvalerate, vinyl hydroxyisobutyrate, and vinyl hydroxycyclohexanecarboxylate; alkyl allyl ethers such as ethyl allyl ether, propyl allyl ether, butyl allyl ether, isobutyl allyl ether, and cyclohexyl allyl ether; and alkyl allyl esters such as ethyl allyl ester, propyl allyl ester, butyl allyl ester, isobutyl allyl ester, and cyclohexyl allyl ester.

The fluorine-non-containing monomers may also be functional group-containing hydrocarbon-based monomers copolymerizable with TFE, HFP and PPVE. Examples of the functional group-containing hydrocarbon-based monomers include hydroxyalkyl vinyl ethers such as hydroxyethyl vinyl ether, hydroxypropyl vinyl ether, hydroxybutyl vinyl ether, hydroxyisobutyl vinyl ether, and hydroxycyclohexyl vinyl ether; fluorine-non-containing monomers having a glycidyl group, such as glycidyl vinyl ether and glycidyl allyl ether; fluorine-non-containing monomers having an amino group, such as aminoalkyl vinyl ethers and aminoalkyl allyl ethers; fluorine-non-containing monomers having an amido group, such as (meth)acrylamide and methylolacrylamide; bromine-containing olefins, iodine-containing olefins, bromine-containing vinyl ethers, and iodine-containing vinyl ethers; and fluorine-non-containing monomers having a nitrile group.

The content of the other monomer units in the fluorine-containing copolymer of the present disclosure is, with respect to the whole of the monomer units, preferably 0 to 2.5% by mass, and more preferably 1.0% by mass or lower, still more preferably 0.5% by mass or lower and especially preferably 0.1% by mass or lower.

The melt flow rate (MFR) of the fluorine-containing copolymer is 4.5 to 9.5 g/10 min, preferably 4.6 g/10 min or higher, more preferably 4.7 g/10 min or higher, still more preferably 4.8 g/10 min or higher, further still more preferably 4.9 g/10 min or higher, further still more preferably 5.0 g/10 min or higher, especially preferably 6.0 g/10 min or higher and most preferably 7.0 g/10 min or higher, and preferably 9.4 g/10 min or lower, more preferably 9.0 g/10 min or lower, still more preferably 8.9 g/10 min or lower, especially preferably 7.9 g/10 min or lower and most preferably 7.0 g/10 min or lower. When the MFR is too low, formed articles excellent in the low oxygen permeation and the 85°C high-temperature rigidity cannot be obtained, and beautiful formed products cannot be obtained with molding by an injection molding method. When the MFR is too high, formed articles excellent in the 110°C abrasion resistance cannot be obtained. When the MFR is too high, the fluorine-containing copolymer becomes one which is liable to deform in a melt state, and it becomes difficult to obtain thick pipes uniform in thickness, and the like. Furthermore, it becomes difficult to obtain beautiful injection molded articles with molding by an injection molding method, and it becomes difficult to form a very thick coating layer in a uniform thickness on a core wire very large in diameter by an extrusion forming method.

In the present disclosure, the MFR is a value obtained as a mass (g/10 min) of a polymer flowing out from a die of 2 mm in inner diameter and 8 mm in length per 10 min at 372°C under a load of 5 kg using a melt indexer G-01 (manufactured by Toyo Seiki Seisaku-sho Ltd.), according to ASTM D1238.

The MFR can be regulated by regulating the kind and amount of a polymerization initiator to be used in polymerization of monomers, the kind and amount of a chain transfer agent, and the like.

The fluorine-containing copolymer of the present disclosure may or may not have -COF, -COOH or -CH₂OH. The fluorine-containing copolymer of the present disclosure has a total number of -COF, -COOH and -CH₂OH of 9C or less per 10⁶ main-chain carbon atoms. The total number of - COF, -COOH and -CH₂OH is, in the ascending order of preference, 70 or less, 50 or less, 40 or less, 30 or less, 20 or less, 15 or less, or less than 6. Due to that the total number of -COF, -COOH and -CH₂OH is in the above range, formed articles which hardly make fluorine ions to dissolve out in chemical solutions such as hydrogen peroxide aqueous solutions can be obtained. The total number of -COF, -COOH and -CH₂OH can be regulated, for example, by suitable selection of the kind of a polymerization initiator or a chain transfer agent, or by a wet heat treatment or fluorination treatment of the fluorine-containing copolymer described later.

The fluorine-containing copolymer of the present disclosure may or may not have a carbonyl group-containing terminal group, -CF=CF₂ or -CH₂OH. The fluorine-containing copolymer of the present disclosure has a total number of carbonyl group-containing terminal groups and -CF=CF₂ and -CH₂OH of 90 or less per 10⁶ main-chain carbon atoms. The total number of the carbonyl group-containing terminal group, -CF=CF₂ and -CH₂OH is, in the ascending order of preference, 70 or less, 50 or less, 40 or less, 30 or less, 20 or less, 15 or less, or less than 12. By making the total number of the carbonyl group-containing terminal group, -CF=CF₂ and -CH₂OH in the above range, there can be obtained formed articles which hardly make fluorine ions to dissolve out in chemical solutions such as hydrogen peroxide aqueous solutions. The total number of the carbonyl group-containing terminal group, -CF=CF₂ and -CH₂OH can be regulated, for example, by suitable selection of the kind of a polymerization initiator or a chain transfer agent, or by a wet heat treatment or fluorination treatment of the fluorine-containing copolymer described later.

The carbonyl group-containing terminal groups are for example, -COF, -COOH, -COOR (R is an alkyl group), -CONH₂, and - O(C=O)O-R (R is an alkyl group). The kinds of the alkyl groups - COOR and -O(C=O)O-R have are determined depending on a polymerization initiator or a chain transfer agent used in production of the fluorine-containing copolymer, and are, for example, alkyl groups having 1 to 6 carbon atoms, such as -CH₃.

The fluorine-containing copolymer of the present disclosure may or may not have -O(C=O)O-R (R is an alkyl group). The fluorine-containing copolymer of the present disclosure has a total number of -O(C=O)O-R (R is an alkyl group) of 90 or less per 10⁶ main-chain carbon atoms. The total number of -O(C=O)O-R (R is an alkyl group) may be, in the ascending order of preference, 70 or less, 50 or less, 40 or less, 30 or less, 20 or less, 15 or less, or less than the quantitative limit (ND). The total number of -O(C=O)O-R (R is an alkyl group) can be regulated, for example, by suitable selection of the kind of a polymerization initiator or a chain transfer agent, or by a wet heat treatment or fluorination treatment of the fluorine-containing copolymer described later.

The fluorine-containing copolymer of the present disclosure may or may not have -CF₂H. The fluorine-containing copolymer preferably has the number of -CF₂H of 90 or less per 10⁶ main-chain carbon atoms. The number of -CF₂H is, in the ascending order of preference, 70 or less, 50 or less, 40 or less, 30 or less, 20 or less, 15 or less, or less than 9. Due to that the number of -CF₂H is in the above range, formed articles which hardly make fluorine ions to dissolve out in chemical solutions such as hydrogen peroxide aqueous solutions can be obtained. The number of -CF₂H can be regulated, for example, by suitable selection of the kind of a polymerization initiator or a chain transfer agent, or by a wet heat treatment or fluorination treatment of the fluorine-containing copolymer described later.

For identification of the kind of the functional groups and measurement of the number of the functional groups, infrared spectroscopy can be used.

The number of the functional groups is measured, specifically, by the following method. First, the fluorine-containing copolymer is molded by cold press to prepare a film of 0.25 to 0.30 mm in thickness. The film is analyzed by Fourier transform infrared spectroscopy to obtain an infrared absorption spectrum, and a difference spectrum against a base spectrum that is completely fluorinated and has no functional groups is obtained. From an absorption peak of a specific functional group observed on this difference spectrum, the number N of the functional group per 1×10⁶ carbon atoms in the fluorine-containing copolymer is calculated according to the following formula (A).$N = I \times K / t$ (A)
- I:: absorbance
- K:: correction factor
- t:: thickness of film (mm)

For reference, for some functional groups, the absorption frequency, the molar absorption coefficient and the correction factor are shown in Table 1. Then, the molar absorption coefficients are those determined from FT-IR measurement data of low molecular model compounds.

### [Table 1]

**Table 1**

| Functional Group | Absorption Frequency (cm⁻¹) | Molar Extinction Coefficient (l/cm/mol) | Correction Factor | Model Compound |
|---|---|---|---|---|
| -COF | 1883 | 600 | 388 | C₇F₁₅COF |
| -COOH free | 1815 | 530 | 439 | H(CF₂)₆COOH |
| -COOH bonded | 1779 | 530 | 439 | H(CF₂)₆COOH |
| -COOCH₃ | 1795 | 680 | 342 | C₇F₁₅COOCH₃ |
| -CONH₂ | 3436 | 506 | 460 | C₇H₁₅CONH₂ |
| -CH₂OH₂, -OH | 3648 | 104 | 2236 | C₇H₁₅CH₂OH |
| -CF₂H | 3020 | 8.8 | 26485 | H(CF₂CF₂)₃CH₂OH |
| -CF=CF₂ | 1795 | 635 | 366 | CF₂=CF₂ |

Absorption frequencies of -CH₂CF₂H, -CH₂COF, -CH₂COOH, - CH₂COOCH₃ and -CH₂CONH₂ are lower by a few tens of kaysers (cm⁻¹) than those of -CF₂H, -COF, -COOH free and -COOH bonded, -COOCH₃ and -CONH₂ shown in the Table, respectively.

For example, the number of the functional group -COF is the total of the number of a functional group determined from an absorption peak having an absorption frequency of 1,883 cm⁻¹ derived from -CF₂COF and the number of a functional group determined from an absorption peak having an absorption frequency of 1,840 cm⁻¹ derived from -CH₂COF.

The number of -CF₂H groups can also be determined from a peak integrated value of the -CF₂H group acquired in a ¹⁹F-NMR measurement using a nuclear magnetic resonance spectrometer and set at a measurement temperature of (the melting point of a polymer + 20)°C.

Functional groups such as a -CF₂H group are functional groups present on the main chain terminals or side chain terminals of the fluorine-containing copolymer, and functional groups present on the main chain or the side chains thereof. These functional groups are introduced to the fluorine-containing copolymer, for example, by a chain transfer agent or a polymerization initiator used in production of the fluorine-containing copolymer. For example, in the case of using an alcohol as the chain transfer agent, or a peroxide having a structure of -CH₂OH as the polymerization initiator, -CH₂OH is introduced on the main chain terminals of the fluorine-containing copolymer. Alternatively, the functional group is introduced on the side chain terminal of the fluorine-containing copolymer by polymerizing a monomer having the functional group.

By carrying out a treatment such as a wet heat treatment or a fluorination treatment on the fluorine-containing copolymer having such functional groups, there can be obtained the fluorine-containing copolymer having the number of functional groups in the above range. The fluorine-containing copolymer of the present disclosure is preferably one having been subjected to the wet heat treatment or the fluorination treatment, and more preferably one having been subjected to the fluorination treatment. The fluorine-containing copolymer of the present disclosure preferably has -CF₃ terminal groups.

The melting point of the fluorine-containing copolymer is preferably 220 to 290°C and more preferably 240 to 280°C. Due to that the melting point is in the above range, the fluorine-containing copolymer is unlikely to deform even in a melt state, can give beautiful injection molded articles by being molded by an injection molding method, can be formed by an extrusion forming method into a very thick coating layer in a uniform thickness on a core wire very large in diameter, can give beautiful tubes with forming by an extrusion forming method, and can give formed articles more excellent in the 110°C abrasion resistance, the low oxygen permeation, the 85°C high-temperature rigidity, the 130°C tensile creep resistance, and the durability to repeated loads.

In the present disclosure, the melting point can be measured by using a differential scanning calorimeter [DSC].

The oxygen permeation coefficient of the fluorine-containing copolymer is preferably 790 cm³·mm/ (m²·24h·atm) or lower. The fluorine-containing copolymer of the present disclosure has an excellent low oxygen permeation due to suitably regulated contents of the HFP unit and the PPVE unit, and melt flow rate (MFR). Hence, for example, syringes obtained by using the fluorine-containing copolymer of the present disclosure can suitably be used for retaining chemical solutions hating incorporation of oxygen in the outside air.

In the present disclosure, the oxygen permeation coefficient can be measured under the condition of a test temperature of 70°C and a test humidity of 0%RH. The specific measurement of the oxygen permeation coefficient can be carried out by a method described in Examples.

In the fluorine-containing copolymer of the present disclosure, the amount of fluorine ions dissolving out therefrom detected by an immersion test in a hydrogen peroxide aqueous solution is, in terms of mass, preferably 4.0 ppm or lower, more preferably 3.0 ppm or lower and more preferably 2.8 ppm or lower. Due to that the amount of fluorine ions dissolving out is in the above range, formed articles are obtained by using the fluorine-containing copolymer of the present disclosure, and the obtained formed articles can inhibit fluorine ions from dissolving out in chemical solutions when used as syringes for retaining chemical solutions.

In the present disclosure, the immersion test in a hydrogen peroxide aqueous solution can be carried out by using the fluorine-containing copolymer and preparing a test piece having a weight corresponding to that of 10 sheets of a formed article (15 mm × 15 mm × 0.2 mm), and putting, in a thermostatic chamber of 95°C, a polypropylene-made bottle in which the test piece and 15 g of a 3-mass% hydrogen peroxide aqueous solution are put and allowing the resultant to stand for 20 hours.

The fluorine-containing copolymer of the present disclosure can be produced by any polymerization method of bulk polymerization, suspension polymerization, solution polymerization, emulsion polymerization and the like. In these polymerization methods, conditions such as temperature and pressure, a polymerization initiator, a chain transfer agent, a solvent and other additives can suitably be set depending on the composition and the amount of a desired fluorine-containing copolymer.

The polymerization initiator may be an oil-soluble radical polymerization initiator or a water-soluble radical initiator.

An oil-soluble radical polymerization initiator may be a known oil-soluble peroxide, and examples thereof typically include:
dialkyl peroxycarbonates such as di-n-propyl peroxydicarbonate, diisopropyl peroxydicarbonate, di-sec-butyl peroxydicarbonate;
peroxyesters such as t-butyl peroxyisobutyrate and t-butyl peroxypivalate;
dialkyl peroxides such as di-t-butyl peroxide; and
di[fluoro(or fluorochloro)acyl] peroxides.

The di[fluoro(or fluorochloro)acyl] peroxides include diacyl peroxides represented by [(RfCOO)-]₂ wherein Rf is a perfluoroalkyl group, an ω-hydroperfluoroalkyl group or a fluorochloroalkyl group.

Examples of the di[fluoro(or fluorochloro)acyl] peroxides include di(ω-hydro-dodecafluorohexanoyl) peroxide, di(ω-hydro-tetradecafluoroheptanoyl) peroxide, di(ω-hydro-hexadecafluorononanoyl) peroxide, di(perfluorobutyryl) peroxide, di(perfluorovaleryl) peroxide, di(perfluorohexanoyl) peroxide, di(perfluoroheptanoyl) peroxide, di(perfluorooctanoyl) peroxide, di(perfluorononanoyl) peroxide, di(ω-chloro-hexafluorobutyryl) peroxide, di(ω-chlorodecafluorohexanoyl) peroxide, di(ω-chloro-tetradecafluorooctanoyl) peroxide, ω-hydrododecafluoroheptanoyl-ω-hydrohexadecafluorononanoyl peroxide, ω-chloro-hexafluorobutyryl-ω-chloro-decafluorohexanoyl peroxide, ω-hydrododecafluoroheptanoyl-perfluorobutyryl peroxide, di(dichloropentafluorobutanoyl) peroxide, di(trichlorooctafluorohexanoyl) peroxide, di(tetrachloroundecafluorooctanoyl) peroxide, di(pentachlorotetradecafluorodecanoyl) peroxide and di(undecachlorotriacontafluorodocosanoyl) peroxide.

The water-soluble radical polymerization initiator may be a well known water-soluble peroxide, and examples thereof include ammonium salts, potassium salts and sodium salts of persulfuric acid, perboric acid, perchloric acid, perphosphoric acid, percarbonic acid and the like, and t-butyl permaleate and t-butyl hydroperoxide. A reductant such as a sulfite salt may be combined with a peroxide and used, and the amount thereof to be used may be 0.1 to 20 times with respect to the peroxide.

Use of an oil-soluble radical polymerization initiator as the polymerization initiator is preferable, because of enabling avoidance of the formation of -COF and -COOH, and enabling easy regulation of the total number of -COF and -COOH of the fluorine-containing copolymer in the above-mentioned range. Further, use of the oil-soluble radical polymerization initiator is likely to make it easy also for the carbonyl group-containing terminal group and -CH₂OH to be regulated in the above-mentioned range. It is especially suitable that the fluorine-containing copolymer is produced by suspension polymerization using the oil-soluble radical polymerization initiator. The oil-soluble radical polymerization initiator is preferably at least one selected from the group consisting of dialkyl peroxycarbonates and di[fluoro(or fluorochloro)acyl] peroxides, and more preferably at least one selected from the group consisting of di-n-propyl peroxydicarbonate, diisopropyl peroxydicarbonate, and di(ω-hydrododecafluoroheptanoyl) peroxide.

Examples of the chain transfer agent include hydrocarbons such as ethane, isopentane, n-hexane and cyclohexane; aromatics such as toluene and xylene; ketones such as acetone; acetates such as ethyl acetate and butyl acetate; alcohols such as methanol, ethanol and 2,2,2-trifluoroethanol; mercaptans such as methyl mercaptan; halogenated hydrocarbons such as carbon tetrachloride, chloroform, methylene chloride and methyl chloride; and 3-fluorobenzotrifluoride. The amount thereof to be added can vary depending on the magnitude of the chain transfer constant of a compound to be used, but the chain transfer agent is used usually in the range of 0.01 to 20 parts by mass with respect to 100 parts by mass of a solvent.

For example, in the cases of using a dialkyl peroxycarbonate, a di[fluoro(or fluorochloro)acyl] peroxide or the like as a polymerization initiator, although there are some cases where the molecular weight of an obtained fluorine-containing copolymer becomes too high and the regulation of the melt flow rate to a desired one is not easy, the molecular weight can be regulated by using the chain transfer agent. It is especially suitable that the fluorine-containing copolymer is produced by suspension polymerization using the chain transfer agent such as an alcohol and the oil-soluble radical polymerization initiator.

The solvent includes water and mixed solvents of water and an alcohol. A monomer to be used for the polymerization of the fluorine-containing copolymer of the present disclosure can also be used as the solvent.

In the suspension polymerization, in addition to water, a fluorosolvent may be used. The fluorosolvent may include hydrochlorofluoroalkanes such as CH₃CClF₂, CH₃CCl₂F, CF₃CF₂CCl₂H and CF₂ClCF₂CFHCl; chlorofluoroalaknes such as CF₂ClCFClCF₂CF₃ and CF₃CFClCFClCF₃; and perfluoroalkanes such as perfluorocyclobutane, CF₃CF₂CF₂CF₃, CF₃CF₂CF₂CF₂CF₃ and CF₃CF₂CF₂CF₂CF₂CF₃, and among these, perfluoroalkanes are preferred. The amount of the fluorosolvent to be used is, from the viewpoint of the suspensibility and the economic efficiency, preferably 10 to 100 parts by mass with respect to 100 parts by mass of the solvent.

The polymerization temperature is not limited, and may be 0 to 100°C. In the case where the decomposition rate of the polymerization initiator is too high, including cases of using a dialkyl peroxycarbonate, a di[fluoro(or fluorochloro)acyl] peroxide or the like as the polymerization initiator, it is preferable to adopt a relatively low polymerization temperature such as in the temperature range of 0 to 35°C.

The polymerization pressure can suitably be determined according to other polymerization conditions such as the kind of the solvent to be used, the amount of the solvent, the vapor pressure and the polymerization temperature, but usually may be 0 to 9.8 MPaG. The polymerization pressure is preferably 0.1 to 5 MPaG, more preferably 0.5 to 2 MPaG and still more preferably 0.5 to 1.5 MPaG. When the polymerization pressure is 1.5 MPaG or higher, the production efficiency can be improved.

Examples of the additives in the polymerization include suspension stabilizers. The suspension stabilizers are not limited as long as being conventionally well-known ones, and methylcellulose, polyvinyl alcohols and the like can be used. With the use of a suspension stabilizer, suspended particles produced by the polymerization reaction are dispersed stably in an aqueous medium, and therefore the suspended particles hardly adhere on the reaction vessel even when a SUS-made reaction vessel not having been subjected to adhesion preventing treatment such as glass lining is used. Accordingly, a reaction vessel withstanding a high pressure can be used, and therefore the polymerization under a high pressure becomes possible and the production efficiency can be improved. By contrast, in the case of carrying out the polymerization without using the suspension stabilizer, the suspended particles may adhere and the production efficiency may be lowered with the use of a SUS-made reaction vessel not having been subjected to adhesion preventing treatment is used. The concentration of the suspension stabilizer in the aqueous medium can suitably be regulated depending on conditions.

In the case of obtaining an aqueous dispersion containing a fluoropolymer by a polymerization reaction, a dried fluoropolymer may be recovered by coagulating, cleaning and drying the fluorine-containing copolymer contained in the aqueous dispersion. Alternatively, in the case of obtaining the fluorine-containing copolymer as a slurry by a polymerization reaction, a dried fluoropolymer may be recovered by taking out the slurry from a reaction vessel, and cleaning and drying the slurry. The fluorine-containing copolymer can be recovered in a powder form by the drying.

The fluorine-containing copolymer obtained by the polymerization may be formed into pellets. A method of forming into pellets is not limited, and a conventionally known method can be used. Examples thereof include methods of melt extruding the fluorine-containing copolymer by using a single-screw extruder, a twin-screw extruder or a tandem extruder and cutting the resultant into a predetermined length to form the fluorine-containing copolymer into pellets. The extrusion temperature in the melt extrusion needs to be varied depending on the melt viscosity and the production method of the fluorine-containing copolymer, and is preferably the melting point of the fluorine-containing copolymer + 20°C to the melting point of the fluorine-containing copolymer + 140°C. A method of cutting the fluorine-containing copolymer is not limited, and there can be adopted a conventionally known method such as a strand cut method, a hot cut method, an underwater cut method, or a sheet cut method. Volatile components in the obtained pellets may be removed by heating the pellets (degassing treatment). Alternatively, the obtained pellets may be treated by bringing the pellets into contact with hot water of 30 to 200°C, steam of 100 to 200°C or hot air of 40 to 200°C.

The fluorine-containing copolymer obtained by the polymerization may be heated in the presence of air and water at a temperature of 100°C or higher (wet heat treatment). Examples of the wet heat treatment include a method in which by using an extruder, the fluorine-containing copolymer obtained by the polymerization is melted and extruded while air and water are fed. The wet heat treatment can convert thermally unstable functional groups of the fluorine-containing copolymer, such as -COF and - COOH, to thermally relatively stable -CF₂H, whereby the total number of -COF and -COOH and the total number of carbonyl group-containing terminal groups and -CH₂OH of the fluorine-containing copolymer can easily be regulated in the above-mentioned ranges. By heating the fluorine-containing copolymer, in addition to air and water, in the presence of an alkali metal salt, the conversion reaction to -CF₂H can be promoted. Depending on applications of the fluorine-containing copolymer, however, it should be paid regard to that contamination by the alkali metal salt must be avoided.

The fluorine-containing copolymer obtained by the polymerization may or may not be subjected to a fluorination treatment. From the viewpoint of providing formed articles which hardly make fluorine ions to dissolve out in chemical solutions such as hydrogen peroxide aqueous solutions, it is preferable that the fluorine-containing copolymer is subjected to a fluorination treatment. The fluorination treatment can be carried out by bringing the fluorine-containing copolymer subjected to no fluorination treatment into contact with a fluorine-containing compound. The fluorination treatment can convert thermally unstable functional groups of the fluorine-containing copolymer, such as the carbonyl group-containing terminal group and -CH₂OH, and thermally relatively stable functional groups thereof, such as -CF₂H, to thermally very stable -CF₃. Resultantly, the total number of the carbonyl group-containing terminal groups and -CH₂OH of the fluorine-containing copolymer can easily be regulated in the above-mentioned ranges.

The fluorine-containing compound is not limited, but includes fluorine radical sources generating fluorine radicals under the fluorination treatment condition. The fluorine radical sources include F₂ gas, CoF₃, AgF₂, UF₆, OF₂, N₂F₂, CF₃OF, halogen fluorides (for example, IF₅ and ClF₃).

The fluorine radical source such as F₂ gas may be, for example, one having a concentration of 100%, but from the viewpoint of safety, the fluorine radical source is preferably mixed with an inert gas and diluted therewith to 5 to 50% by mass, and then used; and it is more preferably to be diluted to 15 to 30% by mass. The inert gas includes nitrogen gas, helium gas and argon gas, but from the viewpoint of the economic efficiency, nitrogen gas is preferred.

The condition of the fluorination treatment is not limited, and the fluorine-containing copolymer in a melted state may be brought into contact with the fluorine-containing compound, but the fluorination treatment can be carried out usually at a temperature of not higher than the melting point of the fluorine-containing copolymer, preferably at 20 to 220°C and more preferably at 100 to 200°C. The fluorination treatment is carried out usually for 1 to 30 hours and preferably 5 to 25 hours. The fluorination treatment is preferred which brings the fluorine-containing copolymer having been subjected to no fluorination treatment into contact with fluorine gas (F₂ gas).

A composition may be obtained by mixing the fluorine-containing copolymer of the present disclosure and as required, other components. The other components include fillers, plasticizers, processing aids, mold release agents, pigments, flame retarders, lubricants, light stabilizers, weathering stabilizers, electrically conductive agents, antistatic agents, ultraviolet absorbents, antioxidants, foaming agents, perfumes, oils, softening agents and dehydrofluorination agents.

Examples of the fillers include silica, kaolin, clay, organo clay, talc, mica, alumina, calcium carbonate, calcium terephthalate, titanium oxide, calcium phosphate, calcium fluoride, lithium fluoride, crosslinked polystyrene, potassium titanate, carbon, boron nitride, carbon nanotube and glass fiber. The electrically conductive agents include carbon black. The plasticizers include dioctyl phthalate and pentaerythritol. The processing aids include carnauba wax, sulfone compounds, low molecular weight polyethylene and fluorine-based auxiliary agents. The dehydrofluorination agents include organic oniums and amidines.

Then, the other components may be other polymers other than the above-mentioned fluorine-containing copolymer. The other polymers include fluororesins other than the above fluorine-containing copolymer, fluoroelastomers and non-fluorinated polymers.

A method of producing the above composition includes a method in which the fluorine-containing copolymer and other components are dry mixed, and a method in which the fluorine-containing copolymer and other components are previously mixed by a mixer, and then, melt kneaded by a kneader, a melt extruder or the like.

The fluorine-containing copolymer of the present disclosure or the above-mentioned composition can be used as a processing aid, a forming material or the like, but it is suitable to use that as a forming material. Then, aqueous dispersions, solutions and suspensions of the fluorine-containing copolymer of the present disclosure, and the copolymer/solvent-based materials can also be utilized; and these can be used for application of coating materials, encapsulation, impregnation, and casting of films. However, since the fluorine-containing copolymer of the present disclosure has the above-mentioned properties, it is preferable to use the copolymer as the forming material.

Formed articles may be obtained by forming the fluorine-containing copolymer of the present disclosure or the above-mentioned composition.

A method of forming the fluorine-containing copolymer or the composition is not limited, and includes injection molding, extrusion forming, compression molding, blow molding, transfer molding, rotomolding and rotolining molding. As the forming method, among these, preferable are extrusion forming, compression molding, injection molding and transfer molding; from the viewpoint of being able to produce forming articles in a high productivity, more preferable are injection molding, extrusion forming and transfer molding, and still more preferable is injection molding. That is, it is preferable that formed articles are extrusion formed articles, compression molded articles, injection molded articles or transfer molded articles; and from the viewpoint of being able to produce molded articles in a high productivity, being injection molded articles, extrusion formed articles or transfer molded articles is more preferable, and being injection molded articles is still more preferable. Beautiful formed articles can be obtained by molding the fluorine-containing copolymer of the present disclosure by an injection molding method.

Formed articles containing the fluorine-containing copolymer of the present disclosure may be, for example, nuts, bolts, joints, films, bottles, gaskets, electric wire coatings, tubes, hoses, pipes, valves, sheets, seals, packings, tanks, rollers, containers, cocks, connectors, filter housings, filter cages, flowmeters, pumps, wafer carriers, and wafer boxes.

The fluorine-containing copolymer of the present disclosure, the above composition and the above formed articles can be used, for example, in the following applications.
Food packaging films, and members for liquid transfer for food production apparatuses, such as lining materials of fluid transfer lines, packings, sealing materials and sheets, used in food production processes;
chemical stoppers and packaging films for chemicals, and members for chemical solution transfer, such as lining materials of liquid transfer lines, packings, sealing materials and sheets, used in chemical production processes; inner surface lining materials of chemical solution tanks and piping of chemical plants and semiconductor factories; members for fuel transfer, such as O (square) rings, tubes, packings, valve stem materials, hoses and sealing materials, used in fuel systems and peripheral equipment of automobiles, and such as hoses and sealing materials, used in ATs of automobiles;
members used in engines and peripheral equipment of automobiles, such as flange gaskets of carburetors, shaft seals, valve stem seals, sealing materials and hoses, and other vehicular members such as brake hoses, hoses for air conditioners, hoses for radiators, and electric wire coating materials;
members for chemical transfer for semiconductor production apparatuses, such as O (square) rings, tubes, packings, valve stem materials, hoses, sealing materials, rolls, gaskets, diaphragms and joints;
members for coating and inks, such as coating rolls, hoses and tubes, for coating facilities, and containers for inks; members for food and beverage transfer, such as tubes, hoses, belts, packings and joints for food and beverage, food packaging materials, and members for glass cooking appliances; members for waste liquid transport, such as tubes and hoses for waste transport;
members for high-temperature liquid transport, such as tubes and hoses for high-temperature liquid transport;
members for steam piping, such as tubes and hoses for steam piping;
corrosionproof tapes for piping, such as tapes wound on piping of decks and the like of ships;
various coating materials, such as electric wire coating materials, optical fiber coating materials, and transparent front side coating materials installed on the light incident side and back side lining materials of photoelectromotive elements of solar cells;
diaphragms and sliding members such as various types of packings of diaphragm pumps;
films for agriculture, and weathering covers for various kinds of roof materials, sidewalls and the like;
interior materials used in the building field, and coating materials for glasses such as non-flammable fireproof safety glasses; and
lining materials for laminate steel sheets used in the household electric field.

The fuel transfer members used in fuel systems of automobiles further include fuel hoses, filler hoses and evap hoses. The above fuel transfer members can also be used as fuel transfer members for gasoline additive-containing fuels, resultant to sour gasoline, resultant to alcohols, and resultant to methyl tertiary butyl ether and amines and the like.

The above chemical stoppers and packaging films for chemicals have excellent chemical resistance to acids and the like. The above chemical solution transfer members also include corrosionproof tapes wound on chemical plant pipes.

The above formed articles also include vehicular radiator tanks, chemical solution tanks, bellows, spacers, rollers and gasoline tanks, waste solution transport containers, high-temperature liquid transport containers and fishery and fish farming tanks.

The above formed articles further include members used for vehicular bumpers, door trims and instrument panels, food processing apparatuses, cooking devices, water- and oil-repellent glasses, illumination-related apparatuses, display boards and housings of OA devices, electrically illuminated billboards, displays, liquid crystal displays, cell phones, printed circuit boards, electric and electronic components, sundry goods, dust bins, bathtubs, unit baths, ventilating fans, illumination frames and the like.

Since formed articles containing the fluorine-containing copolymer of the present disclosure are excellent in the 110°C abrasion resistance, the low oxygen permeation, the 85°C high-temperature rigidity, the 130°C tensile creep resistance, and the durability to repeated loads, the formed articles can suitably be utilized for syringes, tubes, films, electric wire coatings and the like.

Formed articles containing the fluorine-containing copolymer of the present disclosure can suitably be utilized for members to be compressed such as gaskets and packings. The member to be compressed of the present disclosure may be a gasket or a packing.

The size and shape of the members to be compressed of the present disclosure may suitably be set according to applications, and are not limited. The shape of the members to be compressed of the present disclosure may be, for example, annular. The members to be compressed of the present disclosure may also have, in plan view, a circular shape, an elliptic shape, a corner-rounded square or the like, and may be a shape having a throughhole in the central portion thereof.

It is preferable that the members to be compressed of the present disclosure are used as members constituting non-aqueous electrolyte batteries. The members to be compressed of the present disclosure are especially suitable as members to be used in a state of contacting with a non-aqueous electrolyte in non-aqueous electrolyte batteries. That is, the members to be compressed of the present disclosure may also be ones having a liquid-contact surface with a non-aqueous electrolyte in the non-aqueous electrolyte batteries.

The non-aqueous electrolyte batteries are not limited as long as being batteries having a non-aqueous electrolyte, and examples thereof include lithium ion secondary batteries and lithium ion capacitors. Members constituting the non-aqueous electrolyte batteries include sealing members and insulating members.

For the non-aqueous electrolyte, one or two or more of well-known solvents can be used such as propylene carbonate, ethylene carbonate, butylene carbonate, γ-butyllactone, 1,2-dimethoxyethane, 1,2-diethoxyethane, dimethyl carbonate, diethyl carbonate and ethyl methyl carbonate. The non-aqueous electrolyte batteries may further have an electrolyte. The electrolyte is not limited, but may be LiClO₄, LiAsF₆, LiPF₆, LiBF₄, LiCl, LiBr, CH₃SO₃Li, CF₃SO₃Li, cesium carbonate and the like.

The members to be compressed of the present disclosure can suitably be utilized, for example, as sealing members such as sealing gaskets and sealing packings, and insulating members such as insulating gaskets and insulating packings. The sealing members are members to be used for preventing leakage of a liquid or a gas, or penetration of a liquid or a gas from the outside. The insulating members are members to be used for insulating electricity. The members to be compressed of the present disclosure may also be members to be used for the purpose of both of sealing and insulation.

The members to be compressed of the present disclosure can suitably be used as sealing members for non-aqueous electrolyte batteries or insulating members for non-aqueous electrolyte batteries. Further, the members to be compressed of the present disclosure, due to containing the above fluorine-containing copolymer, have the excellent insulating property. Therefore, in the case of using the members to be compressed of the present disclosure as insulating members, the member firmly adhere to two or more electrically conductive members and prevent short circuit over a long term.

The fluorine-containing copolymer of the present disclosure can suitably be utilized as a material for forming electric wire coatings. Since coated electric wires having a coating layer containing the fluorine-containing copolymer of the present disclosure exhibit almost no fluctuation in the outer diameter, the coated electric wires are excellent in the electric properties.

The coated electric wire has a core wire, and the coating layer installed on the periphery of the core wire and containing the fluorine-containing copolymer of the present disclosure. For example, an extrusion formed article made by melt extruding the fluorine-containing copolymer in the present disclosure on a core wire can be made into the coating layer. The coated electric wires are suitable for LAN cables (Eathernet Cables), high-frequency transmission cables, flat cables and heat-resistant cables and the like, and particularly, for transmission cables such as LAN cables (Eathernet Cables) and high-frequency transmission cables.

As a material for the core wire, for example, a metal conductor material such as copper or aluminum can be used. The core wire is preferably one having a diameter of 0.02 to 3 mm. The diameter of the core wire is more preferably 0.04 mm or larger, still more preferably 0.05 mm or larger and especially preferably 0.1 mm or larger. The diameter of the core wire is more preferable 2 mm or smaller.

With regard to specific examples of the core wire, there may be used, for example, AWG (American Wire Gauge)-46 (solid copper wire of 40 µm in diameter), AWG-26 (solid copper wire of 404 µm in diameter), AWG-24 (solid copper wire of 510 µm in diameter), and AWG-22 (solid copper wire of 635 µm in diameter).

The coating layer is preferably one having a thickness of 0.1 to 3.0 mm. It is also preferable that the thickness of the coating layer is 2.0 mm or smaller.

The high-frequency transmission cables include coaxial cables. The coaxial cables generally have a structure configured by laminating an inner conductor, an insulating coating layer, an outer conductor layer and a protective coating layer in order from the core part to the peripheral part. A formed article containing the fluorine-containing copolymer of the present disclosure can suitably be utilized as the insulating coating layer containing the fluorine-containing copolymer. The thickness of each layer in the above structure is not limited, but is usually: the diameter of the inner conductor is approximately 0.1 to 3 mm; the thickness of the insulating coating layer is approximately 0.3 to 3 mm; the thickness of the outer conductor layer is approximately 0.5 to 10 mm; and the thickness of the protective coating layer is approximately 0.5 to 2 mm.

Alternatively, the coating layer may be one containing cells, and is preferably one in which cells are homogeneously distributed.

The average cell size of the cells is not limited, but is, for example, preferably 60 µm or smaller, more preferably 45 µm or smaller, still more preferably 35 µm or smaller, further still more preferably 30 µm or smaller, especially preferable 25 µm or smaller and further especially preferably 23 µm or smaller. Then, the average cell size is preferably 0.1 µm or larger and more preferably 1 µm or larger. The average cell size can be determined by taking an electron microscopic image of an electric wire cross section, calculating the diameter of each cell and averaging the diameters.

The foaming ratio of the coating layer may be 20% or higher, and is more preferably 30% or higher, still more preferably 33% or higher and further still more preferably 35% or higher. The upper limit is not limited, but is, for example, 80%. The upper limit of the foaming ratio may be 60%. The foaming ratio is a value determined as ((the specific gravity of an electric wire coating material - the specific gravity of the coating layer)/(the specific gravity of the electric wire coating material) × 100. The foaming ratio can suitably be regulated according to applications, for example, by regulation of the amount of a gas, described later, to be injected in an extruder, or by selection of the kind of a gas dissolving.

Alternatively, the coated electric wire may have another layer between the core wire and the coating layer, and may further have another layer (outer layer) on the periphery of the coating layer. In the case where the coating layer contains cells, the electric wire of the present disclosure may be of a two-layer structure (skin-foam) in which a non-foaming layer is inserted between the core wire and the coating layer, a two-layer structure (foam-skin) in which a non-foaming layer is coated as the outer layer, or a three-layer structure (skin-foam-skin) in which a non-foaming layer is coated as the outer layer of the skin-foam structure. The non-foaming layer is not limited, and may be a resin layer composed of a resin, such as a TFE/HFP-based copolymer, a TFE/PAVE copolymer, a TFE/ethylene-based copolymer, a vinylidene fluoride-based polymer, a polyolefin resin such as polyethylene [PE], or polyvinyl chloride [PVC].

The coated electric wire can be produced, for example, by using an extruder, heating the fluorine-containing copolymer, extruding the fluorine-containing copolymer in a melt state on the core wire to thereby form the coating layer.

In formation of a coating layer, by heating the fluorine-containing copolymer and introducing a gas in the fluorine-containing copolymer in a melt state, the coating layer containing cells can be formed. As the gas, there can be used, for example, a gas such as chlorodifluoromethane, nitrogen or carbon dioxide, or a mixture thereof. The gas may be introduced as a pressurized gas in the heated fluorine-containing copolymer, or may be generated by mingling a chemical foaming agent in the fluorine-containing copolymer. The gas dissolves in the fluorine-containing copolymer in a melt state.

Then, the fluorine-containing copolymer of the present disclosure can suitably be utilized as a material for products for high-frequency signal transmission.

The products for high-frequency signal transmission are not limited as long as being products to be used for transmission of high-frequency signals, and include (1) formed boards such as insulating boards for high-frequency circuits, insulating materials for connection parts and printed circuit boards, (2) formed articles such as bases of high-frequency vacuum tubes and antenna covers, and (3) coated electric wires such as coaxial cables and LAN cables. The products for high-frequency signal transmission can suitably be used in devices utilizing microwaves, particularly microwaves of 3 to 30 GHz, in satellite communication devices, cell phone base stations, and the like.

In the products for high-frequency signal transmission, the fluorine-containing copolymer of the present disclosure can suitably be used as insulators in that the dielectric loss tangent is low.

As the (1) formed boards, printed wiring boards are preferable in that the good electric property is provided. The printed wiring boards are not limited, but examples thereof include printed wiring boards of electronic circuits for cell phones, various computers, communication devices and the like. As the (2) formed articles, antenna covers are preferable in that the dielectric loss is low.

The fluorine-containing copolymer of the present disclosure can suitably be used for films.

The films of the present disclosure are useful as release films. The release films can be produced by forming the fluorine-containing copolymer of the present disclosure by melt extrusion, calendering, press molding, casting or the like. From the viewpoint that uniform thin films can be obtained, the release films can be produced by melt extrusion.

The films of the present disclosure can be applied to roll surfaces used in OA devices. Then, the fluorine-containing copolymer of the present disclosure is formed into needed shapes by extrusion forming, compression molding, press molding or the like to be formed into sheet-shapes, filmy shapes or tubular shapes, and can be used as surface materials for OA device rolls, OA device belts or the like. Thin-wall tubes and films can be produced particularly by a melt extrusion forming method.

The fluorine-containing copolymer of the present disclosure can suitably be utilized also for tubes, bottles and the like.

### EXAMPLES

The embodiments of the present disclosure will be described by Examples as follows, but the present disclosure is not limited only to these Examples.

Each numerical value in Examples was measured by the following methods.

### (Contents of monomer units)

The content of each monomer unit of the fluorine-containing copolymer was measured by an NMR analyzer (for example, manufactured by Bruker BioSpin GmbH, AVANCE 300, high-temperature probe), or an infrared absorption spectrometer (manufactured by PerkinElmer, Inc., Spectrum One).

### (Melt flow rate (MFR))

The MFR of the fluorine-containing copolymer was determined by using a Melt Indexer G-01 (manufactured by Toyo Seiki Seisaku-sho, Ltd.), and making the polymer to flow out from a die of 2 mm in inner diameter and 8 mm in length at 372°C under a load of 5 kg and measuring the mass (g/10 min) of the polymer flowing out per 10 min, according to ASTM D1238.

### (The number of -CF₂H)

The number of -CF₂H groups of the fluorine-containing copolymer was determined from a peak integrated value of the -CF₂H group acquired in a ¹⁹F-NMR measurement using a nuclear magnetic resonance spectrometer AVANCE-300 (manufactured by Bruker BioSpin GmbH) and set at a measurement temperature of (the melting point of the polymer + 20)°C.

### (The numbers of -COOH, -COOCH₃, -CH₂OH, -COF, -CF=CF₂ and - CONH₂)

A dried powder or pellets obtained in each of Examples and Comparative Examples were molded by cold press to prepare a film of 0.25 to 0.3 mm in thickness. The film was 40 times scanned by a Fourier transform infrared spectrometer [FT-IR (Spectrum One, manufactured by PerkinElmer, Inc.)] and analyzed to obtain an infrared absorption spectrum. The obtained infrared absorption spectrum was compared with an infrared absorption spectrum of an already known film to determine the kinds of terminal groups. Further, from an absorption peak of a specific functional group emerging in a difference spectrum between the obtained infrared absorption spectrum and the infrared absorption spectrum of the already known film, the number N of the functional group per 1×10⁶ carbon atoms in the sample was calculated according to the following formula (A).$N = I \times K / t$ (A)
- I:: absorbance
- K:: correction factor
- t:: thickness of film (mm)

Regarding the functional groups in Examples, for reference, the absorption frequency, the molar absorption coefficient and the correction factor are shown in Table 2. Further, the molar absorption coefficients are those determined from FT-IR measurement data of low molecular model compounds.

### [Table 2]

**Table 2**

| Functional Group | Absorption Frequency (cm⁻¹) | Molar Extinction Coefficient (l/cm/mol) | Correction Factor | Model Compound |
|---|---|---|---|---|
| -COF | 1883 | 600 | 388 | C₇F₁₅COF |
| -COOH free | 1815 | 530 | 439 | H(CF₂)₆COOH |
| -COOH bonded | 1779 | 530 | 439 | H(CF₂)₆COOH |
| -COOCH₃ | 1795 | 680 | 342 | C₇F₁₅COOCH₃ |
| -CONH₂ | 3436 | 506 | 460 | C₇H₁₅CONH₂ |
| -CH₂OH₂, -OH | 3648 | 104 | 2236 | C₇H₁₅CH₂OH |
| -CF=CF₂ | 1795 | 635 | 366 | CF₂=CF₂ |

### (The number of -OC(=O)O-R (carbonate groups))

Analysis of the number of -OC(=O)O-R (carbonate groups) was carried out by a method described in International Publication No. WO2019/220850. The number of -OC(=O)O-R (carbonate groups) was calculated as in the calculation method of the number of functional groups, N, except for setting the absorption frequency at 1,817 cm⁻¹, the molar extinction coefficient at 170 (l/cm/mol) and the correction factor at 1,426.

### (Melting point)

The fluorine-containing copolymer was heated, as a first temperature raising step at a temperature-increasing rate of 10°C/min from 200°C to 350°C, then cooled at a cooling rate of 10°C/min from 350°C to 200°C, and then again heated, as second temperature raising step, at a temperature-increasing rate of 10°C/min from 200°C to 350°C by using a differential scanning calorimeter (trade name: X-DSC7000, manufactured by Hitachi High-Tech Science Corp.); and the melting point of the fluorine-containing copolymer was determined from a melting curve peak observed in the second temperature raising step.

### Comparative Example 1

40.25 kg of deionized water and 0.592 kg of methanol were fed in a 174 L-volume autoclave with a stirrer, and the autoclave inside was sufficiently vacuumized and replaced with nitrogen. Thereafter, the autoclave inside was vacuum deaerated, and in the autoclave put in a vacuum state, 40.25 kg of HFP and 1.41 kg of PPVE were fed; and the autoclave was heated to 25.5°C. Then, TFE was fed until the internal pressure of the autoclave became 0.979 MPa; and then, 1.25 kg of a 8-mass% di(ω-hydroperfluorohexanoyl) peroxide solution (hereinafter, abbreviated to DHP) was fed in the autoclave to initiate polymerization. The internal pressure of the autoclave at the initiation of the polymerization was set at 0.979 MPa, and by continuously adding TFE, the set pressure was made to be held. After 1.5 hours from the polymerization initiation, 0.592 kg of methanol was additionally fed. After 2 hours and 4 hours from the polymerization initiation, 1.25 kg of DHP was additionally fed, and the internal pressure was lowered by 0.002 MPa, respectively; after 6 hours therefrom, 0.96 kg thereof was fed and the internal pressure was lowered by 0.002 MPa. Hereafter, 0.25 kg of DHP was fed at every 2 hours until the reaction finished, and at the every time, the internal pressure was lowered by 0.002 MPa.

Then, at each time point when the amount of TFE continuously additionally fed reached 8.1 kg, 16.2 kg and 24.3 kg, 0.22 kg of PPVE was additionally fed. Then, at each time point when the amount of TFE additionally fed reached 6.0 kg and 18.1 kg, 0.592 kg of methanol was additionally fed in the autoclave. Then, when the amount of TFE additionally fed reached 40.25 kg, the polymerization was made to finish. After the finish of the polymerization, unreacted TFE and HFP were discharged to thereby obtain a wet powder. Then, the wet powder was washed with pure water, and thereafter dried at 150°C for 10 hours to thereby obtain 43.7 kg of a dry powder.

The obtained powder was melt extruded at 370°C by a screw extruder (trade name: PCM46, manufactured by Ikegai Corp.) to thereby obtain pellets of a copolymer. By using the obtained pellets, the above physical properties were measured by the methods described above. The results are shown in Table 3.

### Comparative Example 2

Copolymer pellets were obtained as in Comparative Example 1, except for changing the amount of methanol fed before the polymerization initiation to 0.243 kg, changing the each amount of methanol dividedly additionally fed after the polymerization initiation to 0.243 kg, changing the amount of PPVE fed before the polymerization initiation to 0.93 kg, changing the each amount of PPVE dividedly additionally fed after the polymerization initiation to 0.22 kg, and changing the each set pressure in the autoclave inside before and after the polymerization initiation to 0.855 MPa. By using the obtained pellets, the above physical properties were measured by the methods described above. The results are shown in Table 3.

### Comparative Example 3

Copolymer pellets were obtained as in Comparative Example 1, except for changing the amount of methanol fed before the polymerization initiation to 0.257 kg, changing the each amount of methanol dividedly additionally fed after the polymerization initiation to 0.257 kg, changing the amount of PPVE fed before the polymerization initiation to 1.12 kg, changing the each amount of PPVE dividedly additionally fed after the polymerization initiation to 0.23 kg, and changing the each set pressure in the autoclave inside before and after the polymerization initiation to 0.892 MPa. By using the obtained pellets, the above physical properties were measured by the methods described above. The results are shown in Table 3.

### Comparative Example 4

Copolymer pellets were obtained as in Comparative Example 1, except for changing the amount of methanol fed before the polymerization initiation to 0.423 kg, changing the each amount of methanol dividedly additionally fed after the polymerization initiation to 0.423 kg, changing the amount of PPVE fed before the polymerization initiation to 1.17 kg, changing the each amount of PPVE dividedly additionally fed after the polymerization initiation to 0.24 kg, and changing the each set pressure in the autoclave inside before and after the polymerization initiation to 0.892 MPa. By using the obtained pellets, the above physical properties were measured by the methods described above. The results are shown in Table 3.

### Comparative Example 5

Copolymer pellets were obtained as in Comparative Example 1, except for changing the amount of methanol fed before the polymerization initiation to 0.380 kg, changing the each amount of methanol dividedly additionally fed after the polymerization initiation to 0.380 kg, changing the amount of PPVE fed before the polymerization initiation to 0.69 kg, changing the each amount of PPVE dividedly additionally fed after the polymerization initiation to 0.14 kg, and changing the each set pressure in the autoclave inside before and after the polymerization initiation to 0.892 MPa. By using the obtained pellets, the above physical properties were measured by the methods described above. The results are shown in Table 3.

### Comparative Example 6

Copolymer pellets were obtained as in Comparative Example 1, except for changing the amount of methanol fed before the polymerization initiation to 0.374 kg, changing the each amount of methanol dividedly additionally fed after the polymerization initiation to 0.374 kg, changing the amount of PPVE fed before the polymerization initiation to 1.54 kg, changing the each amount of PPVE dividedly additionally fed after the polymerization initiation to 0.29 kg, and changing the each set pressure in the autoclave inside before and after the polymerization initiation to 0.924 MPa. By using the obtained pellets, the above physical properties were measured by the methods described above. The results are shown in Table 3.

### Comparative Example 7

945 g of deionized water and 7.3 g of methanol were fed in a 4 L-volume autoclave with a stirrer, and the autoclave inside was sufficiently vacuumized and replaced with nitrogen. Thereafter, the autoclave inside was vacuum deaerated, and in the autoclave put in a vacuum state, 945 g of HFP and 27.4 g of PEVE were fed; and the autoclave was heated to 25.5°C. Then, TFE was fed until the internal pressure of the autoclave became 0.895 MPa; and then, 29.4 g of a 8-mass% di(ω-hydroperfluorohexanoyl) peroxide solution (hereinafter, abbreviated to DHP) was fed in the autoclave to initiate polymerization. The internal pressure of the autoclave at the initiation of the polymerization was set at 0.895 MPa, and by continuously adding TFE, the set pressure was made to be held. After 1.5 hours from the polymerization initiation, 7.3 g of methanol was additionally fed. After 2 hours and 4 hours from the polymerization initiation, 29.4 g of DHP was additionally fed, and the internal pressure was lowered by 0.002 MPa, respectively; after 6 hours therefrom, 22.6 g thereof was fed and the internal pressure was lowered by 0.002 MPa. Hereafter, 6.0 g of DHP was fed at every 2 hours until the reaction finished, and at the every time, the internal pressure was lowered by 0.002 MPa.

Then, at each time point when the amount of TFE continuously additionally fed reached 190 g, and 380 g, 5.7 g of PEVE was additionally fed. Then, at a time point when the amount of TFE additionally fed reached 140 g, 7.3 g of methanol was additionally fed in the autoclave. Then, when the amount of TFE additionally fed reached 454 g, the polymerization was made to finish. After the finish of the polymerization, unreacted TFE and HFP were discharged to thereby obtain a wet powder. Then, the wet powder was washed with pure water, and thereafter dried at 150°C for 10 hours to thereby obtain 506 g of a dry powder.

The obtained powder was melt extruded at 370°C by a 14φ screw extruder (manufactured by Imoto Machinery Co. Ltd.) to thereby obtain pellets of a copolymer. By using the obtained pellets, the content of HFP and the content of PEVE were measured by the methods described above. The results are shown in Table 3.

The obtained pellets were deaerated at 200°C for 8 hours in an electric furnace, put in a portable reactor Model TVS1 (manufactured by Taiatsu Techno Corporation), and heated to 200°C. After vacuumizing, F₂ gas diluted to 20% by volume with N₂ gas was introduced to the atmospheric pressure. 0.5 hour after the F₂ gas introduction, vacuumizing was once carried out and F₂ gas was again introduced. Further, 0.5 hour thereafter, vacuumizing was again carried out and F₂ gas was again introduced. Thereafter, while the above operation of the F₂ gas introduction and the vacuumizing was carried out once every 1 hour, the reaction was carried out at a temperature of 200°C for 8 hours. After the reaction was finished, the reactor interior was replaced sufficiently by N₂ gas to finish the fluorination reaction, thereby obtaining pellets. By using the obtained pellets, the above physical properties were measured by the methods described above. The results are shown in Table 3.

### Example 1

Copolymer pellets were obtained as in Comparative Example 1, except for changing the amount of methanol fed before the polymerization initiation to 0.400 kg, changing the each amount of methanol dividedly additionally fed after the polymerization initiation to 0.400 kg, changing the amount of PPVE fed before the polymerization initiation to 1.02 kg, changing the each amount of PPVE dividedly additionally fed after the polymerization initiation to 0.19 kg, and changing the each set pressure in the autoclave inside before and after the polymerization initiation to 0.928 MPa. By using the obtained pellets, the content of HFP and the content of PPVE were measured by the methods described above. The results are shown in Table 3.

The obtained pellets were deaerated at 200°C for 72 hours in an electric furnace, put in a vacuum vibration-type reactor VVD-30 (manufactured by Okawara Mfg. Co. Ltd.), and heated to 120°C. After vacuumizing, F₂ gas diluted to 20% by volume with N₂ gas was introduced to the atmospheric pressure. 0.5 hour after the F₂ gas introduction, vacuumizing was once carried out and F₂ gas was again introduced. Further, 0.5 hour thereafter, vacuumizing was again carried out and F₂ gas was again introduced. Thereafter, while the above operation of the F₂ gas introduction and the vacuumizing was carried out once every 1 hour, the reaction was carried out at a temperature of 120°C for 7 hours. After the reaction was finished, the reactor interior was replaced sufficiently by N₂ gas to finish the fluorination reaction, thereby obtaining pellets. By using obtained pellets, the above physical properties were measured by the methods described above. The results are shown in Table 3.

### Example 2

Copolymer pellets were obtained as in Comparative Example 1, except for changing the amount of methanol fed before the polymerization initiation to 0.374 kg, changing the each amount of methanol dividedly additionally fed after the polymerization initiation to 0.374 kg, changing the amount of PPVE fed before the polymerization initiation to 1.13 kg, changing the each amount of PPVE dividedly additionally fed after the polymerization initiation to 0.22 kg, and changing the each set pressure in the autoclave inside before and after the polymerization initiation to 0.910 MPa. By using the obtained pellets, the content of HFP and the content of PPVE were measured by the methods described above. The results are shown in Table 3.

The obtained pellets were deaerated at 200°C for 8 hours in an electric furnace, put in a vacuum vibration-type reactor VVD-30 (manufactured by Okawara Mfg. Co. Ltd.), and heated to 200°C. After vacuumizing, F₂ gas diluted to 20% by volume with N₂ gas was introduced to the atmospheric pressure. 0.5 hour after the F₂ gas introduction, vacuumizing was once carried out and F₂ gas was again introduced. Further, 0.5 hour thereafter, vacuumizing was again carried out and F₂ gas was again introduced. Thereafter, while the above operation of the F₂ gas introduction and the vacuumizing was carried out once every 1 hour, the reaction was carried out at a temperature of 200°C for 8 hours. After the reaction was finished, the reactor interior was replaced sufficiently by N₂ gas to finish the fluorination reaction, thereby obtaining pellets. By using obtained pellets, the above physical properties were measured by the methods described above. The results are shown in Table 3.

### Example 3

Copolymer pellets were obtained as in Comparative Example 1, except for changing the amount of methanol fed before the polymerization initiation to 0.369 kg, changing the each amount of methanol dividedly additionally fed after the polymerization initiation to 0.369 kg, changing the amount of PPVE fed before the polymerization initiation to 0.449 kg, changing the each amount of PPVE dividedly additionally fed after the polymerization initiation to 0.24 kg, and changing the each set pressure in the autoclave inside before and after the polymerization initiation to 0.892 MPa. By using obtained pellets, the above physical properties were measured by the methods described above. The results are shown in Table 3.

### [Table 3]

**Table 3**

| | HFP content | PPVE content | MFR | -CF₂H | -COOH | -OCOOR | Others | Melting point |
|---|---|---|---|---|---|---|---|---|
| | | | | | -COF | | | |
| | | | | | -CH₂OH | | | |
| | (% by mass) | (% by mass) | (g/10 min) | (number/C10⁶) | (number/C10⁶) | (number/C10⁶) | (number/C10⁶) | (°C) |
| Comparative Example 1 | 5.0 | 2.0 | 8.0 | 329 | 29 | ND | <6 | 281 |
| Comparative Example 2 | 8.5 | 2.0 | 7.0 | 309 | 33 | ND | <6 | 260 |
| Comparative Example 3 | 7.2 | 2.1 | 3.3 | 217 | 32 | ND | <6 | 266 |
| Comparative Example 4 | 7.2 | 2.2 | 14.0 | 394 | 33 | ND | <6 | 266 |
| Comparative Example 5 | 7.2 | 1.3 | 6.3 | 305 | 24 | ND | <6 | 273 |
| Comparative Example 6 | 6.3 | 2.6 | 5.4 | 274 | 36 | ND | <6 | 268 |
| Comparative Example 7 | 7.2 | 2.2(PEVE) | 8.9 | <9 | <6 | ND | <6 | 266 |
| Example 1 | 6.2 | 1.7 | 5.0 | 12 | 7 | ND | <6 | 276 |
| Example 2 | 6.7 | 2.0 | 7.0 | <9 | <6 | ND | <6 | 271 |
| Example 3 | 7.2 | 2.2 | 8.9 | 338 | 33 | ND | <6 | 266 |

The description of "Others (number/C10⁶)" in Table 3 denotes the total number of -COOCH₃, -CF=CF₂ and -CONH₂. The description of "<9" in Table 3 means that the number (total number) og -CF₂H goups was less than 9. The description of "<6" in Table 3 means that the number (total number) of the objective functional groups was less than 6. The description of "ND" in Table 3 means that for the objective functional group, no quantitatively determinable peak could be observed.

Then, by using the obtained pellets, the following properties were evaluated. The results are shown in Table 4.

### (Abrasion test)

By using the pellets and a heat press molding machine, a sheet-shape test piece of approximately 0.2 mm in thickness was prepared and cut out into a test piece of 10 cm × 10 cm. The prepared test piece was fixed on a test bench of a Taber abrasion tester (No. 101, Taber type abrasion tester with an option, manufactured by Yasuda Seiki Seisakusho, Ltd.), and the abrasion test was carried out under the conditions of at a test piece surface temperature of 110°C, at a load of 500 g, using an abrasion wheel CS-10 (rotationally polished in 20 rotations with an abrasion paper #240), and at a rotation rate of 60 rpm, using the Taber abrasion tester. The weight of the test piece after 1,000 rotations was measured, and the same test piece was further subjected to the test of 3,000 rotations and thereafter, the weight thereof was measured. The abrasion loss was determined by the following formula. $Abrasion loss \left(mg\right) = M 1 - M 2$
M1: the weight of the test piece after the 1,000 rotations (mg)
M2: the weight of the test piece after the 3,000 rotations (mg)

### (Oxygen permeation coefficient)

By using the pellets and a heat press molding machine, a sheet-shape test piece of approximately 0.1 mm in thickness was prepared. Measurement of the oxygen permeability was carried out on the obtained test piece according to a method described in JIS K7126-1:2006 by using a differential pressure type permeability tester (L100-5000 type gas permeability tester, manufactured by Systech illinois Ltd.). There was obtained a numerical value of the oxygen permeability at a permeation area of 50.24 cm², a test temperature of 70°C and at a test humidity of 0%RH. By using the obtained oxygen permeability and the thickness of the test piece, the oxygen permeability coefficient was calculated by the following formula. 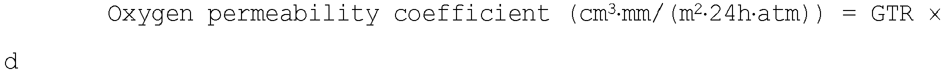 Oxygen permeability coefficient (cm3·mm/(m2·24h·atm)) = GTR × d
GTR: oxygen permeability (cm³/(m²·24h·atm))
d: test piece thickness (mm)

### (85°C load deflection rate)

By using the pellets and a heat press molding machine, a sheet-shape test piece of approximately 3 mm in thickness was prepared and cut out into a test piece of 80 × 10 mm; and the test piece was heated in an electric furnace at 85°C for 20 hours. A test for the 85°C load deflection rate was carried out according to a method described in JIS K7191-1 except for using the obtained test piece, by a heat distortion tester (manufactured by Yasuda Seiki Seisakusho, Ltd.) under the conditions of at a test temperature of 30 to 150°C, at a temperature-increasing rate of 120°C/h, at a bending stress of 1.8 MPa and the flatwise method. The load deflection rate was determined by the following formula. A sheet low in the 85°C load deflection rate is excellent in the 85°C high-temperature rigidity. $Load deflection rate \left(%\right) = a 2 / a 1 \times 100$
a1: a thickness of the test piece before the test (mm)
a2: an amount deflected at 85°C (mm)

### (Tensile creep test)

The tensile creep strain was measured by using TMA-7100, manufactured by Hitachi High-Tech Science Corp. By using the pellets and a heat press molding machine, a sheet of approximately 0.1 mm in thickness was prepared, and a sample of 2 mm in width and 22 mm in length was prepared from the sheet. The sample was mounted on measurement jigs with the distance between the jigs of 10 mm. A load was applied on the sample so that the cross-sectional load became 3.71 N/mm², and allowed to stand at 130°C; and there was measured the displacement (mm) from the timepoint of 90 min from the test initiation to the timepoint of 600 min from the test initiation, and there was calculated the proportion (tensile creep strain (%)) of the displacement (mm) to the initial sample length (10 mm). A sheet low in the tensile creep stain (%) measured under the condition of at 130°C for 600 min is hardly elongated even when a tensile load is applied for a long time in a high-temperature environment, being excellent in the high-temperature tensile creep property (130°C).

### (Tensile strength after 60,000 cycles)

The tensile strength after 60,000 cycles was measured by using a fatigue testing machine MMT-250NV-10, manufactured by Shimadzu Corp. By using the pellets and a heat press molding machine, a sheet of approximately 2.4 mm in thickness was prepared, and a sample in a dumbbell shape (thickness: 2.4 mm, width: 5.0 mm, measuring section length: 22 mm) was prepared by using an ASTM D1708 microdumbbell. The sample was mounted on measuring jigs and the measuring jigs were installed in a state of the sample being mounted in a thermostatic chamber at 110°C. The tensile operation in the uniaxial direction was repeated at a stroke of 0.2 mm and at a frequency of 100 Hz, and there was measured the tensile strength at every tensile operation (tensile strength at the time the stroke was +0.2 mm, unit: N).

A sheet high in the tensile strength after 60,000 cycles retains the high tensile strength even after loading is repeated 60,000 times, being excellent in the durability (110°C) to repeated loads.

### (Immersion test in a hydrogen peroxide aqueous solution)

By using pellets and a heat press molding machine, a sheet of approximately 0.2 mm in thickness was prepared and test pieces of 15 mm square were prepared. 10 sheets of the test pieces and 15 g of a 3-mass% hydrogen peroxide aqueous solution were put in a 50-mL polypropylene-made bottle, and heated in an electric furnace at 95°C for 20 hours, and thereafter cooled to room temperature. The test pieces were removed from the hydrogen peroxide aqueous solution; and a TISAB solution (10) (manufactured by Kanto Chemical Co., Inc.) was added to the remaining hydrogen peroxide aqueous solution; and the fluorine ion concentration in the obtained hydrogen peroxide aqueous solution was measured by a fluorine ion meter. The fluorine ion concentration (concentration of fluorine ions having dissolved out) per sheet weight was calculated from an obtained measurement value according to the following formula. 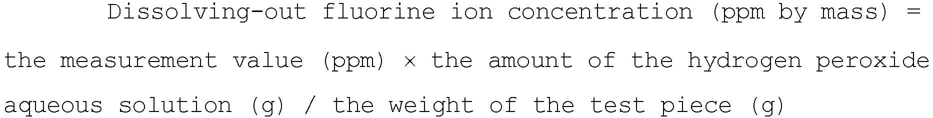 Dissolving-out fluorine ion concentration (ppm by mass) = the measurement value (ppm) × the amount of the hydrogen peroxide aqueous solution (g) / the weight of the test piece (g)

### (Test of the own weight deformation in the melt time)

By using the pellets and a heat press molding machine, there was prepared a formed article of 13 mm in diameter and approximately 6.5 mm in height. A test piece of 6.3 mm in height was prepared by cutting the obtained formed article. The prepared test piece was put in a SUS-made petri dish, and heated in an electric furnace at 330°C for 30 min; and thereafter, the test piece together with the petri dish was water cooled. The diameter of the surface (bottom surface) of the test piece having contacted with the petri dish was measured by calipers, and the percentage increase of the bottom area was calculated by the following formula. 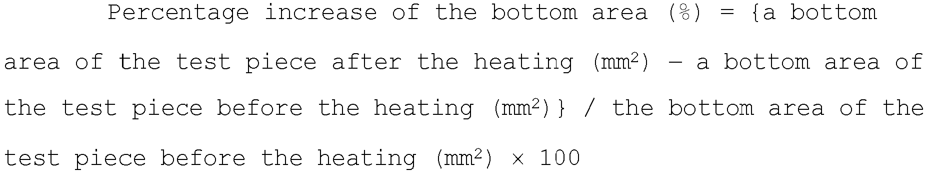 Percentage increase of the bottom area (%) = {a bottom area of the test piece after the heating (mm2) - a bottom area of the test piece before the heating (mm2)} / the bottom area of the test piece before the heating (mm2) × 100

It is meant that the lower the percentage increase of the bottom area, the more hardly the formed article is deformed by its own weight in a melt time. The fluorine-containing copolymer which gives formed articles low in the bottom area percentage increase, even in the case of being formed by the extrusion forming method to prepare thick sheets and large pipes, is excellent in that there are obtained formed articles in a melt state which are hardly deformed and the formed articles which have a desired shape after being cooled and solidified.

### (Injection moldability)

The fluorine-containing copolymer was injection molded by using an injection molding machine (SE50EV-A, manufactured by Sumitomo Heavy Industries, Ltd.) set at a cylinder temperature of 385°C, a metal mold temperature of 200°C and an injection speed of 100 mm/s. The metal mold used was a metal mold (four injection molded articles were collected, 15 mm × 15 mm × 1 mmt, side gates) Cr plated on HPM38. The obtained four injection molded articles were observed and evaluated according to the following criteria. The presence/absence of roughness of each of the surfaces was checked by touching the surface of each of the injection molded articles.
3: The whole surfaces of the four formed articles were smooth.
2: Roughness was observed on the surface within the region of 1 cm from the portion where the gate of the metal mold had been positioned, in one among the four formed articles.
1: Roughness was observed on the surface within the region of 1 cm from the portion where the gate of the metal mold had been positioned, in two to four among the four formed articles.
0: Roughness was observed on the whole surfaces of the four formed article.

### (Electric wire coating test)

By using a 30-mmϕ electric wire coating extruder (manufactured by Tanabe Plastics Machinery Co. Ltd.), the fluorine-containing copolymer was extrusion coated in the following coating thickness on a silver-plated conductor with 0.08-mm nineteen twisted wires to thereby obtain a coated electric wire. The electric wire coating extrusion conditions were as follows.
a) Core conductor: conductor diameter: about 0.40 mm (0.08 mm × 19 twists)
b) Coating thickness: 0.30 mm
c) Coated electric wire diameter: 1.00 mm
d) Electric wire take-over speed: 120 m/min
e) Extrusion condition:
   · Cylinder screw diameter = 30 mm, a single-screw extruder of L/D = 24
   · Die (inner diameter)/tip (outer diameter) = 10.0 mm/4.0 mm Set temperature of the extruder: barrel section C-1 (330°C), barrel section C-2 (360°C), barrel section C-3 (365°C), head section H (370°C), die section D-1 (370°C), die section D-2 (370°C), Set temperature for preheating core wire: 80°C

### (Fluctuation in the outer diameter)

By using an outer diameter measuring device (ODAC18XY, manufactured by Zumbach Electronic AG), the outer diameter of the obtained coated electric wire was measured continuously for 1 hour. A fluctuation value of the outer diameter was determined by rounding, to two decimal places, an outer diameter value most separated from the predetermined outer diameter value (1.00 mm) among measured outer diameter values. The proportion (fluctuation rate of the outer diameter) of the absolute value of a difference between the predetermined outer diameter and the fluctuation value of the outer diameter to the predetermined outer diameter (1.00 mm) was calculated and evaluated according to the following criteria. 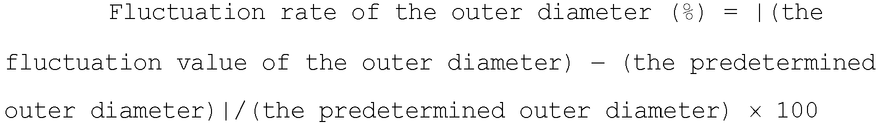 Fluctuation rate of the outer diameter (%) = |(the fluctuation value of the outer diameter) - (the predetermined outer diameter)|/(the predetermined outer diameter) × 100
±1%: the fluctuation rate of the outer diameter was 1% or lower.
±2%: the fluctuation rate of the outer diameter was higher than 1% and 2% or lower.
Poor: the fluctuation rate of the outer diameter was higher than 2%.

### (Tube formability)

By using a ϕ30-mm extruder (manufactured by Tanabe Plastics Machinery Co. Ltd.), the pellets were extruded to obtain a tube of 10.0 mm in outer diameter and 1.0 mm in wall thickness. The extrusion conditions were as follows.
a) Die inner diameter: 25 mm
b) Mandrel outer diameter: 13 mm
c) Sizing die inner diameter: 10.5 mm
d) Take-over speed: 0.4 m/min
e) Outer diameter: 10.0 mm
f) Wall thickness: 1.0 mm
g) Extrusion condition:
   · Cylinder screw diameter = 30 mm, a single-screw extruder of L/D = 22
      Set temperature of the extruder: barrel section C-1 (350°C), barrel section C-2 (370°C), barrel section C-3 (380°C), head section H-1 (390°C), die section D-1 (390°C), die section D-2 (390°C)

The obtained tube was observed and evaluated according to the following criteria. The appearance of the tube was visually observed.

Good: The appearance was good.

Poor: The cross-section did not become circular and the appearance was poor, including that flattening occurred and uneven wall thickness emerged.

### (Film formability)

By using a ϕ14-mm extruder (manufactured by Imoto Machinery Co. Ltd.) and a T die, the pellets were formed to prepare a film. The extrusion conditions were as follows.
a) Take-up speed: 1 m/min
b) Roll temperature: 120°C
c) Film width: 70 mm
d) Thickness: 0.10 mm
e) Extrusion condition:
   · Cylinder screw diameter = 14 mm, a single-screw extruder of L/D = 20
      Set temperature of the extruder: barrel section C-1 (330°C), barrel section C-2 (350°C), barrel section C-3 (365°C), T die section (370°C)

The extrusion forming of the fluorine-containing copolymer was continued until the fluorine-containing copolymer became enabled to be stably extruded from the extruder. Successively, by extruding the fluorine-containing copolymer, a film (70 mm wide) of 11 m or longer in length was prepared so that that thickness became 0.10 mm. A portion of 10 to 11 m of the obtained film was cut out from one end of the film and there was prepared a test piece (1 m long and 70 mm wide) for measuring the fluctuation in the thickness. Then, there were measured thicknesses of 3 points in total on one end of the obtained film of a middle point in the width direction and 2 points separated by 25 mm from the middle point in the width direction. Further, there were measured 9 points in total of 3 middle points in the width direction spaced at intervals of 25 cm from the middle point in the width direction of the one end of the film toward the other end thereof, and 2 points separated by 25 mm in the width direction from the each middle point of the 3 middle points. Among the 12 measurement values in total, the case where the number of points having measurement values out of the range of ±10% of 0.10 mm was 1 or less was taken as good; and the case where the number of points having measurement values out of the range of ±10% of 0.10 mm was 2 or more was taken as poor.

### [Table 4]

**Table 4**

| | 110°C Abrasion loss | Oxygen permeation coefficient | 85°C Load deflection rate | 130°C Tensile creep strain | Tensile strength after 60,000 cycles | Hydrogen peroxide aqueous solution immersion test | Own weight deformation test | injection moldability | Electric wire coating test | Tube formability | Film formability |
|---|---|---|---|---|---|---|---|---|---|---|---|
| | (mg) | cm³·mm /(m²·24h· atm) | (%) | (%) | (N) | Amount of fluorine ions dissolving out (ppm by mass) | (%) | | Fluctuation in outer diameter | | |
| Comparative Example 1 | 20.5 | 768 | 40% | 0.44 | 10.89 | 5.3 | 133 | 3 | 0.01 | Good | - |
| Comparative Example 2 | 17.7 | 783 | 70% | 1.57 | 7.31 | 5.3 | 123 | 3 | 0.01 | Good | - |
| Comparative Example 3 | 12.7 | 864 | 67% | 0.86 | 8.85 | 4.4 | 69 | 0 | 0.02 | Good | - |
| Comparative Example 4 | 22.9 | 722 | 54% | 1.09 | 8.48 | 6.0 | 161 | 3 | Poor | Poor | - |
| Comparative Example 5 | 20.1 | 759 | 49% | 0.84 | 8.72 | 5.2 | 115 | 2 | 0.01 | Good | - |
| Comparative Example 6 | 15.7 | 841 | 62% | 0.74 | 9.63 | 4.9 | 102 | 1 | 0.01 | Good | - |
| Comparative Example 7 | 18.8 | 799 | 66% | 1.08 | 11.43 | 2.4 | 139 | - | - | - | - |
| Example 1 | 17.0 | 769 | 50% | 0.75 | 9.78 | 2.7 | 96 | 1 | 0.01 | Good | Good |
| Example 2 | 18.3 | 764 | 54% | 0.81 | 9.18 | 2.4 | 123 | 3 | 0.01 | Good | Good |
| Example 3 | 18.8 | 768 | 57% | 1.02 | 8.59 | 5.5 | 139 | 3 | 0.02 | Good | Good |

## Claims

1. A copolymer, which is a fluorine-containing copolymer comprising tetrafluoroethylene (TFE) units and, based on the total of monomer units, 6.0-7.6 mass% of hexafluoropropylene (HFP) units and 1.5-2.4 mass% of perfluoro(propyl vinyl ether) (PPVE) units, and which has
- a melt flow rate at 372°C of 4.5-9.5 g/10 min, measured by the method defined in the description, and
- a total number of carbonyl group-containing terminal groups, -CF=CF₂ and -CH₂OH of ≤ 90 per 10⁶ main-chain carbon atoms, measured by the method defined in the description.

2. The copolymer of claim 1, which contains, based on the total of monomer units, 6.2-7.2 mass% of HFP units.

3. The copolymer of claim 1, which contains, based on the total of monomer units, 6.0-6.9 mass% of HFP units.

4. The copolymer of claim 3, which contains, based on the total of monomer units, 6.0-6.8 mass% of HFP units.

5. The copolymer of any of claims 1-4, which contains, based on the total of monomer units, 1.7-2.2 mass% of PPVE units.

6. The copolymer of any of claims 1-4, which contains, based on the total of monomer units, 1.5-2.1 mass% of PPVE units.

7. The copolymer of claim 6, which contains, based on the total of monomer units, 1.5-2.0 mass%, of PPVE units.

8. The copolymer of any of claims 1-7, which has a melt flow rate at 372°C of 5.0-8.9 g/10 min.

9. The copolymer of any of claims 1-8, which has a total number of carbonyl group-containing terminal groups, -CF=CF₂ and -CH₂OH of ≤ 40 per 10⁶ main-chain carbon atoms, measured by the method defined in the description.

10. The copolymer of any of claims 1-8, which has ≤ 90 -CF₂H groups per 10⁶ main-chain carbon atoms, measured by the method defined in the description.

11. An injection molded article, comprising the copolymer of any of claims 1-10.

12. A coated electric wire, comprising a coating layer comprising the copolymer of any of claims 1-10.

13. A formed article, which comprises the copolymer of any of claims 1-10 and is a syringe, a tube, a film or an electric wire coating.

## Patentansprüche

1. Copolymer, das ein fluorhaltiges Copolymer, umfassend Tetrafluorethylen (TFE)-Einheiten und, bezogen auf die Gesamtheit der Monomereinheiten, 6,0-7,6 Masse-% Hexafluorpropylen (HFP)-Einheiten und 1,5-2,4 Masse-% Perfluor(propylvinylether) (PPVE)-Einheiten, ist und das
- eine Schmelzflussrate bei 372°C von 4,5-9,5 g/10 min, gemessen durch das in der Beschreibung definierte Verfahren, und
- eine Gesamtanzahl an carbonylgruppenhaltigen Endgruppen, -CF=CF₂ und -CH₂OH von ≤ 90 pro 10⁶ Hauptkettenkohlenstoffatome, gemessen durch das in der Beschreibung definierte Verfahren, aufweist.

2. Copolymer nach Anspruch 1, das, bezogen auf die gesamten Monomereinheiten, 6,2-7,2 Masse-% HFP-Einheiten enthält.

3. Copolymer nach Anspruch 1, das, bezogen auf die gesamten Monomereinheiten, 6,0-6,9 Masse-% HFP-Einheiten enthält.

4. Copolymer nach Anspruch 3, das, bezogen auf die gesamten Monomereinheiten, 6,0-6,8 Masse-% HFP-Einheiten enthält.

5. Copolymer nach einem der Ansprüche 1-4, das, bezogen auf die gesamten Monomereinheiten, 1,7-2,2 Masse-% PPVE-Einheiten enthält.

6. Copolymer nach einem der Ansprüche 1-4, das, bezogen auf die gesamten Monomereinheiten, 1,5-2,1 Masse-% PPVE-Einheiten enthält.

7. Copolymer nach Anspruch 6, das, bezogen auf die gesamten Monomereinheiten, 1,5-2,0 Masse-% PPVE-Einheiten enthält.

8. Copolymer nach einem der Ansprüche 1-7, das eine Schmelzflussrate bei 372°C von 5,0-8,9 g/10 min aufweist.

9. Copolymer nach einem der Ansprüche 1-8, das, eine Gesamtanzahl an carbonylgruppenhaltigen Endgruppen, -CF=CF₂ und -CH₂OH von ≤ 40 pro 106 Hauptkettenkohlenstoffatome, gemessen durch das in der Beschreibung definierte Verfahren, aufweist.

10. Copolymer nach einem der Ansprüche 1-8, das ≤ 90 -CF₂H-Gruppen pro 10⁶ Hauptkettenkohlenstoffatome, gemessen durch das in der Beschreibung definierte Verfahren, aufweist.

11. Spritzgussformteil, umfassend das Copolymer nach einem der Ansprüche 1-10.

12. Beschichteter elektrischer Draht, umfassend eine Beschichtungsschicht, umfassend das Copolymer nach einem der Ansprüche 1-10.

13. Geformter Gegenstand, der das Copolymer nach einem der Ansprüche 1-10 umfasst und eine Spritze, ein Rohr, einen Film oder eine Beschichtung eines elektrischen Drahts ist.

## Revendications

1. Copolymère, qui est un copolymère contenant du fluor comprenant des unités tétrafluoroéthylène (TFE) et, sur la base du total des unités monomères, 6,0-7,6 % en masse d'unités hexafluoropropylène (HFP) et 1,5-2,4 % en masse d'unités perfluoro(éther vinylique de propyle) (PPVE), et qui présente
- un taux de fluidité à chaud à 372 °C de 4,5-9,5 g/10 min, déterminé selon le procédé défini dans la description, et
- un nombre total de groupes terminaux contenant un groupe carbonyle, de - CF=CF₂ et de -CH₂OH de ≤ 90 par 10⁶ atomes de carbone de la chaîne principale, déterminé selon le procédé défini dans la description.

2. Copolymère selon la revendication 1, qui contient, sur la base du total des unités monomères, 6,2-7,2 % en masse d'unités HFP.

3. Copolymère selon la revendication 1, qui contient, sur la base du total des unités monomères, 6,0-6,9 % en masse d'unités HFP.

4. Copolymère selon la revendication 3, qui contient, sur la base du total des unités monomères, 6,0-6,8 % en masse d'unités HFP.

5. Copolymère selon l'une quelconque des revendications 1 à 4, qui contient, par rapport au total des unités monomères, de 1,7 à 2,2 % en masse d'unités de PPVE.

6. Copolymère selon l'une quelconque des revendications 1 à 4, qui contient, sur la base du total des unités monomères, 1,5-2,1 % en masse d'unités PPVE.

7. Copolymère selon la revendication 6, qui contient, sur la base du total des unités monomères, 1,5-2,0 % en masse d'unités PPVE.

8. Copolymère selon l'une quelconque des revendications 1 à 7, qui présente un taux de fluidité à 372 °C de 5,0-8,9 g/10 min.

9. Copolymère selon l'une quelconque des revendications 1 à 8, qui présente un nombre total de groupes terminaux contenant un groupe carbonyle, de -CF=CF₂ et de -CH₂OH de ≤ 40 par 10⁶ atomes de carbone de la chaîne principale, déterminé selon le procédé défini dans la description.

10. Copolymère selon l'une quelconque des revendications 1 à 8, qui présente ≤ 90 groupes -CF₂H par 10⁶ atomes de carbone de la chaîne principale, déterminé selon le procédé défini dans la description.

11. Article moulé par injection, comprenant le copolymère selon l'une quelconque des revendications 1 à 10.

12. Fil électrique revêtu, comprenant une couche de revêtement comprenant le copolymère selon l'une quelconque des revendications 1 à 10.

13. Article formé, qui comprend le copolymère selon l'une quelconque des revendications 1 à 10 et qui est une seringue, un tube, un film ou un revêtement de fil électrique.
